**Europäisches Patentamt**

**European Patent Office**

**Office européen des brevets**

(19)

(11) Veröffentlichungsnummer : **0 308 951 B1**

(12) # EUROPÄISCHE PATENTSCHRIFT

(45) Veröffentlichungstag der Patentschrift :
03.04.91 Patentblatt 91/14

(51) Int. Cl.⁵ : **B23C 5/20**

(21) Anmeldenummer : **88115648.3**

(22) Anmeldetag : **23.09.88**

(54) **Planfräsmesserkopf.**

(30) Priorität : **25.09.87 DE 3732268**

(43) Veröffentlichungstag der Anmeldung :
**29.03.89 Patentblatt 89/13**

(45) Bekanntmachung des Hinweises auf die
Patenterteilung :
**03.04.91 Patentblatt 91/14**

(84) Benannte Vertragsstaaten :
**AT BE CH DE ES FR GB IT LI NL SE**

(56) Entgegenhaltungen :
**EP-A- 0 126 432**
**AT-B- 304 995**
**DE-A- 3 530 745**
**DE-C- 3 607 528**
**US-A- 3 624 879**
**US-A- 3 675 290**

(73) Patentinhaber : **Bronn, Klaus, Dipl.-Ing.**
**Mögglinger Strasse 54**
**W-7079 Böbingen (DE)**

(72) Erfinder : **Bronn, Klaus, Dipl.-Ing.**
**Mögglinger Strasse 54**
**W-7079 Böbingen (DE)**

(74) Vertreter : **Schroeter, Helmut et al**
**Schroeter, Fleuchaus, Lehmann Wehser,**
**Holzer & Gallo Patentanwälte Wolfratshauser**
**Strasse 145 Postfach 71 03 50**
**W-8000 München 71 (DE)**

## Beschreibung

Die Erfindung bezieht sich auf einen Planfräsmesserkopf mit den Merkmalen des Oberbegriffs von Anspruch 1.

Am Grundkörper eines Planfräsmesserkopfs sind mehrere, z.B. acht oder 120 Kassetten befestigt, die je eine Wendeschneidplatte tragen. Wenn alle Kassetten mit Wendeschneidplatten in den Grundkörper eingesetzt sind, ist es erforderlich, die Wendeschneidplatten so auszurichten, daß ihre Schneiden, nämlich die Hauptschneide, die Nebenschneide und eine Fase, die Hauptschneide und Nebenschneide miteinander verbindet, aufeinander ausgerichtet sind. Die DE-C-3 140 905 zeigt zu diesem Zweck Möglichkeiten, einerseits die Kassette als Ganzes zu verstellen, andererseits innerhalb der Kassette mit einer Halteplatte in Form eines Viertelkreis-Sektors die Wendeschneidplatte gegenüber dem Grundkörper zu verdrehen.

Will man eine möglichst hohe Standzeit eines Planfräsmesserkopfes mit eingesetzten Wendeschneidplatten erzielen, so ist es erforderlich, dafür zu sorgen, daß alle Schneidkanten einen gleichen Anteil an der Schneidarbeit leisten. Dazu ist es nötig, sie außerordentlich genau auf gleiche Lagen in Bezug auf den Grundkörper zu bringen. Um dies zu ermöglichen, ist bei einem Planfräsmesserkopf der eingangs genannten Art, wie er beispielsweise der DE-C-3 607 528 entnehmbar ist, vorgesehen, daß jede der Kassetten zur Feinjustierung der Lage der zugehörigen Wendeschneidplatte gegenüber dem Grundkörper einen Einschnitt aufweist, der sich von einer der Seitenflächen der Kassette her längs einer gedachten Ebene, die quer zur Hauptebene der Wendeschneidplatte verläuft, in die Kassette hinein erstreckt, und daß dem Einschnitt eine Schraube zugeordnet ist, die an oder in der Kassette in Bezug auf den Einschnitt so angeordnet ist, daß eine Drehung der unter Spannung stehenden Schraube eine Veränderung der Breite des Einschnittes, hauptsächlich an seinem freien Ende zur Folge hat.

Nach diesem Stand der Technik wird also anders als in der DE-C-3 140 905 nicht die Kassette als Ganzes verschoben, sondern die Kassette wird mit einem Einschnitt versehen und beim Justiervorgang verformt. Auf diese Weise läßt sich eine hohe Genauigkeit der Justierung erzielen.

Bei der DE-C-3 607 528 ist die Schraube jedoch als im mittleren Bereich mit einem mutternförmigen Schraubenkopf versehene Feinjustierschraube ausgeführt, die an ihren beiden Enden jeweils einen Gewindeabschnitt aufweist. Im eingebauten Zustand ist der Schraubenkopf der Feinjustierschraube in dem Einschnitt mit veränderbarer Breite angeordnet, und die beiden Gewindeabschnitte der Feinjustierschraube greifen jeweils in ein Gewinde ein. Diese beiden Gewinde sind miteinander fluchtend in die einander gegenüberliegenden Wände des Einschnittes eingearbeitet.

Bei einer solchen Anordnung ergeben sich insofern Nachteile, als der Herstellungsaufwand für derartige Kassetten durch das Bohren und Schneiden der Gewinde vergrößert wird und die Einleitung der durch die Schraube ausgeübten Zugkräfte in die durch elastische Verformung relativ zueinander zu bewegenden Teile der Kassette ungünstig ist.

Somit liegt der Erfindung die Aufgabe zugrunde, einen Planfräsmesserkopf der eingangs genannten Art so weiterzubilden, daß der Herstellungsaufwand für die Kassetten verringert und die Einleitung der von der Schraube ausgeübten Kräfte in die gegeneinander beweglichen Teile der Kassette verbessert wird.

Diese Aufgabe wird durch die Erfindung gemäß Anspruch 1 gelöst.

Durch diese erfindungsgemäßen Maßnahmen wird erreicht, daß die Gewinde, die für das Eingreifen der Zugschraube erforderlich sind, nicht unmittelbar im Körper der jeweiligen kassette selbst, sondern in einem von der Kassette zunächst unabhängigen Widerlager-Körper ausgebildet werden können, der bei den entsprechenden Bearbeitungsschritten frei zugänglich und einfach handhabbar ist und erst nach Fertigstellung des jeweiligen Gewindes in einen korrespondierenden Hohlraum im Kassettenkörper eingesetzt wird, der seinerseits auf wesentlich einfachere Weise ausgebildet werden kann, als eine Bohrung mit nachträglich eingeschnittenem Gewinde. Darüber hinaus ist wenigstens eines der Widerlager keil- oder kegelförmig ausgebildet, so daß sich eine äußerst günstige Einleitung dieser Zugkräfte in die gegeneinander beweglichen Kassettenteile ergibt.

Weiterhin ist folgender Aspekt von besonderer Bedeutung: Wendeschneidplatten aus geschliffenem Hartmetall haben eine relativ hohe Genauigkeit, aber den Nachteil, daß beim Schleifen Hartmetall-Substratkörner zerstört werden, wodurch Körnerteile ausbrechen und die Schneidkanten rauh werden. Dieser Nachteil tritt bei feingesinterten Wendeschneidplatten nicht auf.

Diese haben aber einen anderen Nachteil, nämlich unterschiedliche Abmessungen von bis zu 0,26 mm (zulässige ISO-Toleranz). Man kann also nicht einfach eine abgenutzte Wendeschneidplatte gegen eine andere austauschen, sondern ist dann genötigt, die Wendeschneidplatte neu zu justieren. Durch die Erfindung wird diese Justierung vereinfacht und mit hoher Genauigkeit durchführbar, so daß feingesinterte Wendeschneidplatten, die überdies einen Preisvorteil gegenüber geschliffenen Wendeschneidplatten bieten, verwendbar sind.

Dadurch, daß die Kassette mit mehreren Einschnitten versehen werden kann, ergibt sich eine Feinjustiermöglichkeit in mehreren Richtungen, wodurch erreicht wird, daß alle Schneidkanten gleiche Schneidarbeiten leisten. Die Schnittdrücke verteilen sich demnach gleichmäßig auf alle. Es wird also nicht eine der Wendeschneidplatten stärker beansprucht als andere, und die Standzeit des Messerkopfes erhöht sich. Durch das Einstellen der Nebenschneide zur Planfläche des Werkstückes können Schwingungen, die sich beim Bearbeiten von labilen Werkstücken ergeben, unterdrückt werden, so daß das bearbeitete Werkstück eine sehr feine gleichmäßige Oberfläche erhält.

Es ist aus der DE - C2 - 31 40 905 bekannt, Wendeschneidplatten mit Hilfe einer Halteplatte (Sektorplatte) von der etwaigen Form eines Viertelkreis-Sektors an einer Kassette anzubringen, so daß die Winkelstellung der Wendeschneidplatte durch Schwenken der Sektorplatte verändert werden kann.

Weiterbildungen der Erfindung

ergeben sich aus den Unteransprüchen.

So lassen sich zum Zusammenziehen beiderseits eines Einschnittes keilförmige oder hohlkegelförmige Ausnehmungen vorsehen, in die Keile oder Kegel gelegt werden, die von einer Schraube mit Rechts- und Linksgewinde gegeneinander gezogen werden.

Ein Einschnitt läßt sich andererseits dadurch erweitern, daß ein Keil oder Kegel, z.B. in Form eines Schraubenkopfes, in den Einschnitt hineingezogen wird.

Vorzugsweise werden Kegel oder Keile ballig ausgeführt, damit sie an den entsprechenden Keil- oder Kegelöffnungen trotz der Schwenkbewegungen der Kassettenteile jeweils eine gleichmäßige Anlage haben.

Aus der EP-OS 126 432 ist es bekannt, ungelochte Wendeschneidplatten zu verwenden. Gemäß anderen Weiterbildungen der Erfindung läßt sich eine Kassette zusammen mit einer ungelochten Wendeschneidplatte unter Verwendung mindestens eines Klemmkeils am Grundkörper festlegen. Hierbei wird durch geeignete Formgebung des oder der Klemmkeile dafür gesorgt, daß die Verformungen zur Feinjustierung der Kassetten unbehindert von den von den Klemmkeilen ausgeübten Klemmdrücken durchgeführt werden können.

Ausführungsbeispiele mit weiteren Merkmalen der Erfindung werden im folgenden anhand der Zeichnungen beschrieben.

Figur 1 zeigt in natürlicher Größe, zum Teil in Seitenansicht, zum Teil im Längsschnitt, den Grundkörper eines Planfräsmesserkopfes mit einigen eingesetzten Kassetten.

Figur 2 zeigt in Draufsicht, zum Teil im Querschnitt nach Linie IIII in Figur 1, denselben Grundkörper mit nur einer eingesetzten Kassette.

Figur 3 bis 5 zeigen, demgegenüber vergrößert, eine Kassette, wie rechts in Figur 1, allein, in Draufsicht und zwei Seitenansichten, ohne Halteplatte für eine Wendeschneidplatte.

Figur 6 und 7 zeigen, in gleichem Maßstab wie Figur 3, ein Widerlager in Form eines Keiles in Draufsicht bzw. Seitenansicht.

Figur 8 zeigt in gleichem Maßstab eine Einstellschraube.

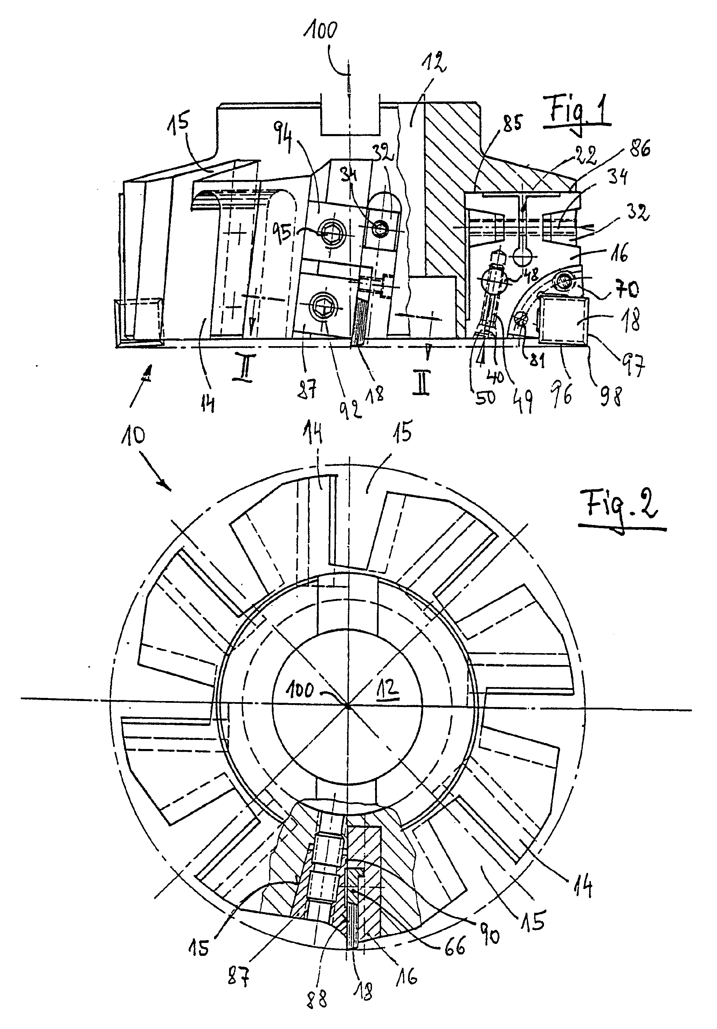

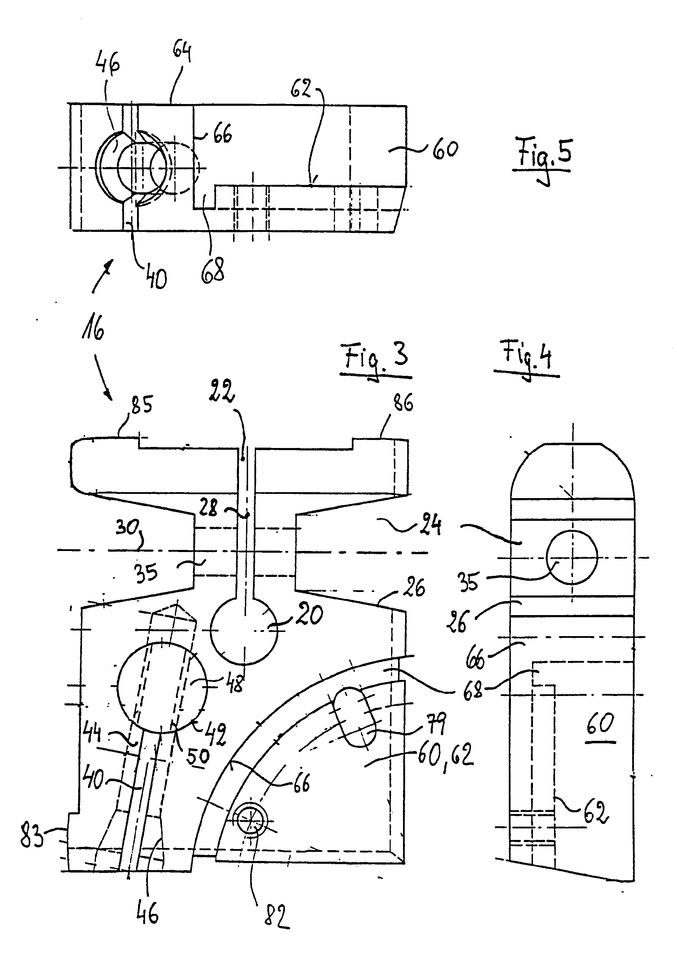

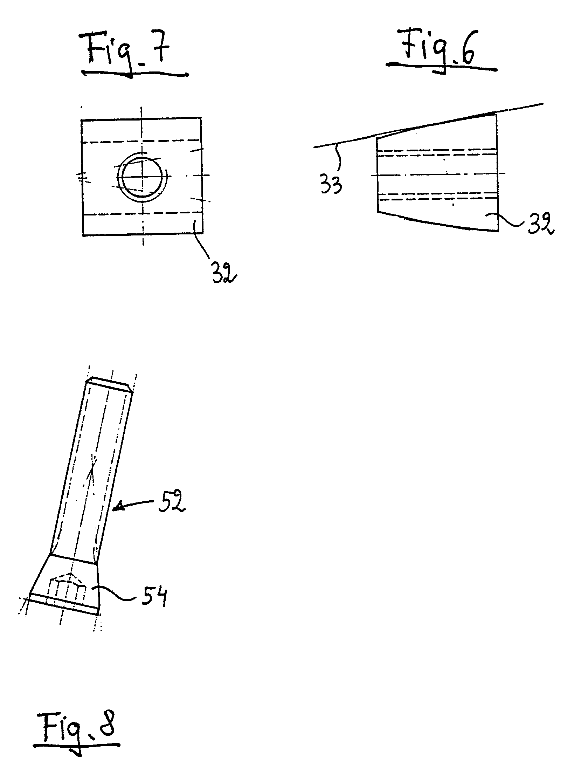

Figur 1 und 2 zeigen einen Grundkörper 10 eines Planfräsmesserkopfes. Der Grundkörper besteht aus Werkzeugstahl und hat eine zentrische zylindrische Öffnung 12 zum Festspannen auf einem Fräsdorn oder der Spindelnase einer Fräsmaschine. Am Umfang des Grundkörpers 10 sind acht Ausnehmungen 14 vorgesehen. In jeder dieser Ausnehmungen wird eine Kassette 16 untergebracht und befestigt, die ihrerseits eine ungelochte Wendeschneidplatte 18 haltert. Die Kassette, die für sich allein in den Figuren 3 bis 5 dargestellt ist, ist ein Block aus massivem Werkzeugstahl. Die Kassette hat eine durchgehende Bohrung 20 und einen Einschnitt 22, der von außen her bis in die Bohrung 20 hineinführt. Beiderseits des Einschnittes 22 sind zwei Ausnehmungen 24 vorgesehen. Die beiden Wandungen 26 jeder Ausnehmung verjüngen sich keilförmig gegen den Einschnitt 22 und sind zueinander symmetrisch, sowohl zu einer Ebene 28 wie auch zu einer Ebene 30. Der in Figur 3 obere Teil der Kassette 16 läßt sich unter Zusammendrücken des Einschnittes 22 zusammenziehen. Hierzu dienen zwei Widerlager 32 (Figur 1, 6 und 7), die in je eine der Ausnehmungen 24 eingefügt werden, und eine als Zugmittel dienende Schraube 34 (Figur 1), die durch einen den Einschnitt 22 querende Bohrung 35 (Figuren 3 und 4) in der Kassette geführt wird. Von der Schraube 34 hat die eine Hälfte Rechtsgewinde, die andere Linksgewinde. Entsprechend hat das eine Widerlager 32 eine Gewindebohrung mit Rechtsgewinde, das andere eine mit Linksgewinde. Durch Verdrehen der Schraube lassen sich also die Widerlager 32 mehr oder weniger weit in die Ausnehmungen 24 hineinziehen, so daß der obere Teil der Kassette mehr oder weniger weit zusammengezogen werden kann.

Die Widerlager 32 haben die etwaige Form von Keilen. Ihre Außenwände (oben und unten in Figur 6) sind jedoch etwas ballig ausgebildet (siehe hierzu Figur 6 im Vergleich zu einer Ebene 33), so daß sie jeweils nur in einer recht schmalen Fläche Berührung mit den Wandungen 26 haben und jeweils eine definierte Berührungsfläche gegeben ist, unabhängig von dem sich beim Zusammenziehen verändernden Keilwinkel der Wandungen 26.

In die Kassette führt von schräg unten (Figur 3) ein Einschnitt 40 hinein, der in einer durch die ganze Kassette führenden Querbohrung 42 endet. Eine Längsbohrung 44 verläuft parallel zum Einschnitt 40 und rechtwinklig zur Achse der Querbohrung 42 und durchdringt die Querbohrung. An ihrem in Figur 3 unteren Ende geht die Längsbohrung 44 in eine keilförmige Ausnehmung 46 über, die glatte Wände hat. In die Querbohrung 42 wird ein Widerlager 48 in Form einer Zylindermutter, d.h. eines zylindrischen Stiftes eingefügt, der quer zu seiner Längsrichtung eine Gewindebohrung 50 aufweist, die bei eingesetzter Zylindermutter die Bohrung 44 fortsetzt. Als Zugmittel dient eine in Figur 8 dargestellte Schraube 52, deren Kopf 54 kegelförmig ausgebildet ist, und zwar passend zum Kegelwinkel der Ausnehmung 46. Wiederum kann der Kopf etwas ballig ausgebildet sein. (Nicht dargestellt).

Wird die Schraube 52 in die Längsbohrung 44 geführt und in das Widerlager 48 (Zylindermutter) geschraubt, bis ihr Kopf 54 die Kegelwandung der Ausnehmung 46 berührt, so läßt sich bei weiterem Eindrehen der Schraube der Einschnitt 40 und damit das in Figur 3 untere Ende der Kassette 16 erweitern.

Die Ausnehmung 46 kann statt kegelförmig auch keilförmig sein. Dementsprechend kann von einer Schraube ein Widerlager in Form eines Keils mit balligen Außenwänden in die Ausnehmung gezogen werden.

Die Ausnehmungen 24 können statt keilförmig auch kegelförmig sein. Dementsprechend können von der Schraube 34 Widerlager in Form von Kegelstümpfen mit balligen Außenwandungen in diese Ausnehmungen hineingezogen werden.

Die Kassette hat eine Vertiefung 60, die in an sich bekannter Weise zur Aufnahme und Justierung einer Wendeschneidplatte dient. Die eingesetzte Wendeschneidplatte 18 läßt sich um ihre wirksame Ecke 98 (Figur 1) schwenken.

Die Kassette hat drei relativ kleine Anlageflächen 83, 85, 86, mit denen sie nach ihrem Einbau in den Grundkörper 10 mit den Wandungen der dort vorgesehenen Ausnehmungen 14 in Berührung kommt. Hierdurch wird einerseits für eine definierte Lage der Kassette im Grundkörper gesorgt. Andererseits wird erreicht, daß Verformungen der Kassette durch Änderungen der Weite der Einschnitte nicht behindert werden. Die Lage der eingebauten Kassette im Grundkörper zeigen Figur 1 rechts und Mitte sowie Figur 2 unten. Die Kassette samt Halteplatte 70 und lose eingelegter Wendeschneidplatte 18 wird in eine der etwa quaderförmigen Ausnehmungen 14 eingeführt. In die daneben liegende keilförmige Ausnehmung 15 wird sodann ein Klemmkeil 87 eingeführt, der mit Druckflächen 88 und 90 (Figur 2) die Wendeschneidplatte 18 bzw. die Kassette 16 berührt, nicht aber die Halteplatte 70. Der Klemmkeil 87 wird durch eine Schraube 92 in die keilförmige Ausnehmung 15 hineingezogen.

Oberhalb des Klemmkeils 87 ist ein weiterer Klemmkeil 94 (Figur 1) vorgesehen, der etwa den mittleren Bereich der Kassette festlegt. Er berührt von der Kassette im wesentlichen den Bereich beiderseits der Bohrung 20 (Figur 3) und behindert infolgedessen die Verformung der Kassette durch Verengen des Einschnittes 22 nicht.

## Funktion

Nachdem in den Grundkörper 10 acht Kassetten mit je einer Wendeschneidplatte 18 eingebaut sind und die zugehörigen Klemmkeile 87 und 94 angelegt aber noch nicht festgezogen sind, werden die acht Wendeschneidplatten feinjustiert, was wie folgt geschieht: Zunächst wird der Winkel der Schneidkanten 96, 97 (Figur 1) gegenüber der Rotationsachse 100 des Grundkörpers feinjustiert. Dann wird durch Erweitern des Einschnittes 40 der radiale Abstand der Ecke 98 der Wendeschneidplatte gegenüber der Rotationsache 100 feinjustiert. Schließlich wird die Höhe der Ecke 98 gegenüber einer zur Rotationsachse rechtwinklig zu denkenden Ebene feinjustiert, was durch Zusammenziehen oder Spreizen des Einschnitts 22 geschieht. Da die Kassette sich oben mit ihren beiden Anlageflächen 85 und 86 am Grundkörper abstützt, muß beim Zusammenziehen des Einschnittes 22 die Ecke 98 in Figur 1 abwärts wandern. In dieser Weise werden alle acht Wendeschneidplatten so justiert, daß ihre Schneidkanten 96, 97 und die wirksame Ecke 98 in der Größenordnung von Mikrometern untereinander gleiche Lagen haben. Dies läßt sich mit Hilfe an sich bekannter mechanischer, optischer oder elektronischer Meßeinrichtungen kontrollieren.

## Ansprüche

1. Planfräsmesserkopf mit einem Grundkörper (10), an dessen Umfang in Ausnehmungen (14) zum Haltern je einer Wendeschneidplatte (18) dienende Kassetten (16) befestigt sind, von denen jede zur Feinjustierung der Lage der Wendeschneidplatte (18) gegenüber dem Grundkörper (10) folgende Merkmale hat:

a) mindestens ein Einschnitt (22, 40) verläuft von einer der Seitenflächen der Kassette (16) her längs einer gedachten Ebene, die quer zur Hauptebene der zu halternden Wendeschneidplatte (18) verläuft, in die Kassette hinein,

b) jedem Einschnitt ist eine Schraube (34, 49) zugeordnet, die an oder in der Kassette in Bezug auf den Einschnitt derart angeordnet ist, daß eine Drehung der unter Spannung stehenden Schraube eine Veränderung der Breite des Einschnittes hauptsächlich an seinem freien Ende zur Folge hat, dadurch **gekennzeichnet**, daß die Schraube (34, 49) mit je zwei in die Kassette eingreifenden Widerlagern (32, 48, 54) eine Zugverbindung bildet, und daß wenigstens eines der beiden Widerlager (32, 54) in einer in der Kassette (16) vorgesehenen keilförmigen (oder hohl-kegelförmigen) Ausnehmung (24, 46) unterge-bracht ist und in etwa die Form eines Keils (oder Kegels) mit passendem Keil- (oder Kegel-)winkel aufweist.

2. Planfräsmesserkopf nach Anspruch 1, dadurch **gekennzeichnet**, daß jedes der beiden Widerlager (32) in einer in der Kassette (16) vorgesehenen keilförmigen (oder hohlkegelförmigen) Ausnehmung (24) untergebracht ist und in etwa die Form eines Keils (oder Kegels) mit passendem Keil- (oder Kegel-)winkel aufweist, daß die beiden Ausnehmungen (24) beiderseits des zugehörigen Einschnitts (22) angeordnet sind und sich gegen den Einschnitt verjüngen, daß die Keile (oder Kegel) gegensinnige Gewindebohrungen haben und daß die Schraube (34) mit Rechtsgewinde in die eine und mit Linksgewinde in die andere Gewindebohrung eingreift.

3. Planfräsmesserkopf nach Anspruch 1, dadurch **gekennzeichnet**, daß nur eines der beiden Widerlager (54) in einer in der Kassette (16) vorgesehenen keilförmgien (oder hohlkegelförmigen) Ausnehmung (46) untergebracht ist und in etwa die Form eines Keils (oder Kegels) mit passendem Keil- (oder Kegel-)winkel aufweist, daß die keilförmige (oder kegelförmige) Ausnehmung (46) am freien Ende des Einschnittes angeordnet ist, und daß die Schraube (52) eine Zugverbindung zwischen diesem Keil (oder Kegel) und einem in größerer Tiefe des Einschnittes untergebrachten zweiten Widerlager (48) mit Gewindebohrung bildet.

4. Planfräsmesserkopf nach Anspruch 3, dadurch **gekennzeichnet**, daß als erstes Widerlager (54) der kegelförmig ausgebildete Kopf der Schraube dient.

5. Planfräsmesserkopf nach einem der Ansprüche 2 bis 4, dadurch **gekennzeichnet**, daß die Widerlager (32, 54) von der etwaigen Form eines Keils oder Kegels eine ballige (konvexe) wirksame Außenfläche haben.

6. Planfräsmesserkopf nach einem der vorangehenden Ansprüche, dadurch **gekennzeichnet**, daß zum Festklemmen je einer ungelochten Wendeschneidplatte (18) zusammen mit ihrer Kassette (16) im Grundkörper (10) mindestens ein Klemmkeil (87, 94) dient, der in eine passende keilförmige Ausnehmung (15), die radial in den Grundkörper hineinfürt, mit Hilfe einer Schraube (92, 94) einziehbar ist.

7. Planfräsmesserkopf nach Anspruch 6, dadurch **gekennzeichnet**, daß ein Klemmkeil (87) unter Druck die Wendeschneidplatte (18) und die Kassette (16) berührt und den dazwischenliegenden Bereich der Halteplatte (70) überbrückt.

8. Planfräsmesskopf nach Anspruch 7, dadurch **gekennzeichnet**, daß ein Klemmkeil (94) die Kassette (16) in einer Anlagefläche berührt, die beiderseits einer Bohrung (20) der Kassette liegt und quer zu ihrem Einschnitt (22) verläuft.

## Claims

1. Surface milling cutter with a base body (10), secured to whose periphery in recesses (14) for the purpose of mounting a respective turning cutting plate (18) are holders (16), each of which has the following features for the purpose of fine adjustment of the position of the turning cutting plate (18) with respect to the base body (10) :

a) at least one slot (22, 40) extends from one of the side surfaces of the holder (16) along a hypothetical plane, which extends transverse to the main plane of the turning cutting plate (18) to be mounted, into the holder,

b) associated with each slot is a screw (34, 49) which is so arranged on or in the holder with respect to the slot that rotation of the stressed screw results in a change in the breadth of the slot, principally at its free end, characterised in that the screw (34, 49) forms a tension connection together with two respective supports (32, 48, 54) engaging in the holder and that at least one of the two supports (32, 54) is accommodated in a wedge-shaped (or hollow coneshaped) recess (24, 46) provided in the holder (16) and has approximately the shape of a wedge (or cone) with a matching wedge (or cone) angle.

2. Surface milling cutter as claimed in Claim 1, characterised in that each of the two supports (32) is accommodated in a wedge-shaped (or hollow cone-shaped) recess (24) provided in the holder (16) and has approximately the shape of a wedge (or cone) with a matching wedge (or cone) angle, that the two recesses (24) are disposed on both sides of the associated slot (22) and taper towards the slot, that the wedges (or cones) have oppositely handed threaded bores and that the screw (34) engages with a right-handed thread in the one threaded bore and with a left-handed thread in the other.

3. Surface milling cutter as claimed in Claim 1, characterised in that only one of the two supports (54) is accommodated in a wedge-shaped (or hollow cone-shaped) recess (46) provided in the holder (16) and has approximately the shape of a wedge (or cone) with a matching wedge (or cone) angle, that the wedge-shaped (or cone-shaped) recess (46) is disposed at the free end of the slot and that the screw (52) forms a tension connection between this wedge (or cone) and a second support (48) with a threaded bore accommodated at a greater depth of the slot.

4. Surface milling cutter as claimed in Claim 3, characterised in that the conically shaped head of the screw serves as the first support (54).

5. Surface milling cutter as claimed in one of Claims 2 to 4, characterised in that the supports (32, 54) of the approximate shape of a wedge or cone have a bulged (convex) effective outer surface.

6. Surface milling cutter as claimed in one of the preceding claims, characterised in that at least one clamping wedge (87, 94) serves to clamp a respective imperforate turning cutting plate (18) together, with its holder (16) in the base body (10), which clamping wedge may be drawn with the aid of a screw (92, 94) into a matching wedgeshaped recess (15) which passes radially into the base body.

7. Surface milling cutter as claimed in Claim 6, characterised in that a clamping wedge (87) contacts the turning cutting plate (18) and the holder (16) under pressure and bridges the intervening region of the mounting plate (70).

8. Surface milling cutter as claimed in Claim 7, characterised in that a clamping wedge (94) contacts the holder (16) in an engagement surface which lies on both sides of a bore (20) in the holder and extends transverse to its slot (22).

## Revendications

1. Tête de fraisage, avec un corps de base (10) sur la périphérie de laquelle des cassettes (16) servant chacune à maintenir une plaquette de coupe réversible (18) sont fixées dans des évidements (14), chaque cassette présentant, en vue d'un réglage fin de la position de la plaquette de coupe réversible (18) par rapport au corps de base (10), les caractéristiques suivantes :

a) au moins une entaille (22, 40) s'étend dans la cassette, en partant de l'une des faces latérales de la cassette (16), suivant un plan imaginaire transversal au plan principal de la plaquette de coupe réversible (18) à maintenir,

b) à chaque entaille est associée une vis (34, 49) qui est disposée sur ou dans la cassette par rapport à l'entaille, de façon qu'une rotation de la vis placée sous tension ait pour conséquence une variation de la largeur de l'entaille, principalement à son extrémité libre, caractérisée en ce que la vis (34, 49) forme avec chaque fois deux butées (32, 48, 54) agissant sur la cassette une liaison de traction, et qu'au moins l'une des deux butées (32, 54) est logée dans un évidement (24,46) en forme de coin (ou en forme de cône creux), prévu dans la cassette (16) et présente à peu près la forme d'un coin (ou d'un cône) avec un angle de coin (ou de cône) permettant un ajustement.

2. Tête de fraisage selon la revendication 1, caractérisée en ce que chacune des butées (32) est logée dans un évidement (24) en forme de coin (ou en forme de cône creux) prévu dans la cassette (16), et présente à peu près la forme d'un coin (ou d'un cône) avec un angle de coin (ou de cône) permettant un ajustement, les deux évidements (24) étant disposés des deux côtés de l'entaille (22) correspondante et s'effilant en direction de l'entaille, les coins (ou cônes) présentant des taraudages à pas de sens inverse et la vis (34) s'engageant avec un filetage à droite dans un taraudage et avec un filetage à gauche dans l'autre taraudage.

3. Tête de fraisage selon la revendication 1, caractérisée en ce que seule l'une des deux butées (54) est logée dans un évidement (46) en forme de coin (ou en forme de cône creux) prévu dans la cassette (16), et présente à peu près la forme d'un coin (ou d'un cône) avec un angle de coin (ou de cône) permettant un ajustement, l'évidement (46) en forme de coin (ou de cône) étant disposé à l'extrémité libre de l'entaille, et la vis (52) constituant une liaison de traction entre ce coin (ou cône) et une deuxième butée (48) portant un taraudage, logée plus profondément dans l'entaille.

4. Tête de fraisage selon la revendication 3, caractérisée en ce que la tête de la vis, qui est réalisée sous forme de cône, sert de première butée (54).

5. Tête de fraisage selon l'une des revendications 2 à 4, caractérisée en ce que les butées (32, 54) présentent une surface extérieure active bombée (convexe) ayant à peu près la forme d'un coin ou d'un cône.

6. Tête de fraisage selon l'une des revendications précédentes, caractérisée en ce que pour serrer chaque fois une plaquette de coupe réversible (18) non perforée, avec sa cassette (16) dans le corps de base (10), on se sert d'au moins un coin de serrage (87, 94) qui est susceptible d'être introduit à l'aide d'une vis (92, 95) dans un évidement ajusté en forme de coin (15) passant radialement dans le corps de base.

7. Tête de fraisage selon la revendication 6, caractérisée en ce qu'un coin de serrage (87) est en contact sous pression avec la plaquette de coupe réversible (18) et la cassette (16) et ponte la zone intermédiaire de la plaque de maintien (70).

8. Tête de fraisage selon la revendication 7, caractérisée en ce qu'un coin de serrage (94) est en contact avec la cassette (16), sur sa surface d'appui qui est situé des deux côtés d'un perçage (20) et s'étend transversalement à son entaille (22).

Fig. 1

Fig. 2

7

Fig.5

Fig. 3

Fig. 4

Fig. 7

Fig. 6

32

33

32

52

54

Fig. 8